# DEMANDE DE BREVET EUROPEEN

(11) **EP 1 387 526 A1**
(43) Date de publication de la demande: **04.02.2004**
(21) Numéro de dépôt: 03291585.2
(22) Date de dépôt: 27.06.2003
(51) Int. Cl.: H04L 12/24

(54) **Système de gestion de réseau par règles comportant un moteur d'interférence**

(30) Priorité: 31.07.2002 FR 0209741
(71) Demandeur: ALCATEL, 75008 Paris (FR)
(72) Inventeur: Koops, Mark, 91310 Montlhery (FR); Gonguet, Arnaud, 75013 Paris (FR); Poupel, Olivier, 35190 Tinteniac (FR)
(74) Mandataire: Chaffraix, Sylvain

(57) **Abrégé**

Système de gestion de réseau (NMS), disposant de moyens d'acquisition de règles de police (R_{S}, R_{T}, R_{E}), et de moyens pour déterminer des commandes (C) correspondant à ces règles de police et les transmettre à des éléments de réseaux, caractérisé en ce que les règles sont composées de règles de services (R_{S}) et de règles d'implémentation (R_{T}, R_{E}), et en ce qu'il dispose de moyens de traitement (IE) pour inférer les règles afin de déterminer les commandes

## Description

La présente invention est relative au domaine de la gestion de services de télécommunication. Plus précisément, elle concerne la gestion de ces services au moyen de règles de police *(policy rules).* L'invention s'applique particulièrement bien aux réseaux mettant en oeuvre des protocoles de la famille IP (Internet *Protocol)* ou d'autres protocoles de niveau plus élevé.

Ces réseaux permettent de mettre en oeuvre des services de différents types. Parmi ces types de service, on peut citer les réseaux privés virtuels VPN (pour Virtual Private Network, en anglais), la vidéo-conférence etc.

La mise en oeuvre de ces services a un impact sur le comportement qui est attendu du réseau. Ce comportement attendu peut notamment être le respect d'une certaine qualité de service QoS (pour Quality of Service) associée à ce service. Dans ce cas, la qualité de service est négociée entre au moins l'opérateur du réseau de télécommunication et le fournisseur de service, sous la forme d'un accord de niveau service SLA (pour Service *Level* Agreement). Ce SLA est ensuite spécifié de façon plus technique sous la forme d'un SLS (Service Level Specification), qui peut être conforme aux spécifications de l'IETF (Internet *Engineering Task Force).*

Autrement dit, le SLS est dérivé d'un SLA et contient les paramètres techniques qui doivent être utilisés pour implémenter le service.

Pour mettre en oeuvre un service sur un réseau de télécommunication, il est donc nécessaire de paramétrer ce réseau afin de permettre l'établissement de ce service, et par exemple, le respect de la qualité de service négociée.

Ce paramétrage peut être réalisé au moyen de règles de police *(policy rules),* appelées plus simplement par la suite, règles. Ces règles comportent typiquement un ensemble de conditions et un ensemble d'actions. Ces ensembles peuvent être réduits à un unique élément, c'est-à-dire qu'une règle peut ne comporter qu'une unique condition et/ou une unique action.

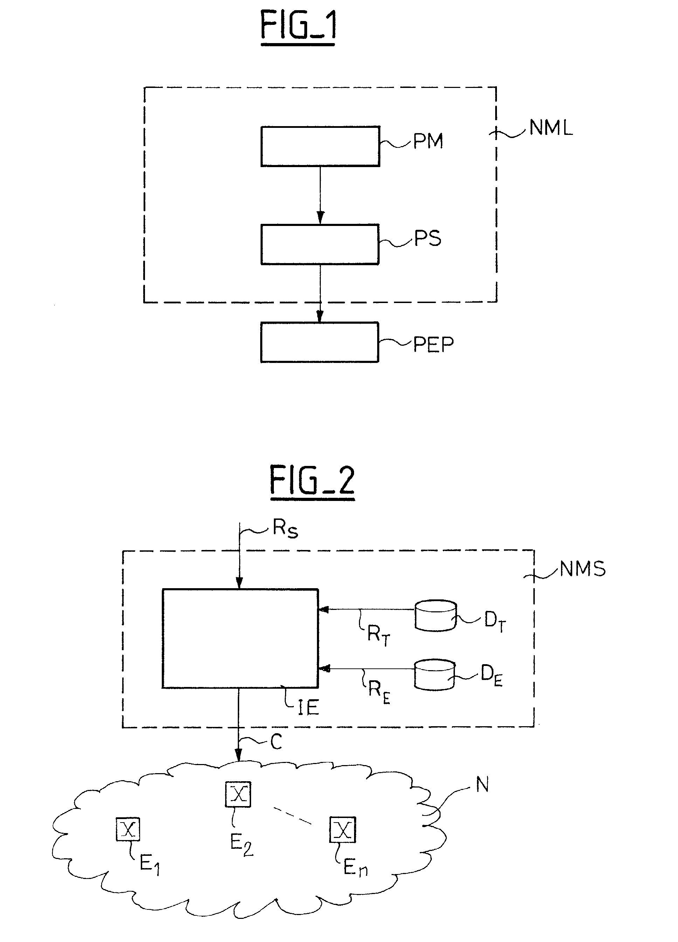

La figure 1 illustre la façon dont ces règles sont mises en oeuvre.

Classiquement, elles sont définies au niveau d'un gestionnaire de règles PM (ou *Policy manager*) en anglais, puis transmises à un serveur de règles PS (*Policy Server*). Ce serveur de règles est chargé de leur application par les éléments de réseau qui, dans ce contexte, sont appelés « Point d'application des règles » PEP (pour *Policy Enforcement Point*).

Le gestionnaire de règles et le serveur de règles appartiennent classiquement à la couche de gestion de réseau (NML pour *Network Management Layer*) ; Plus précisément, ils peuvent appartenir à un système de gestion de réseau NMS (pour *Network Management System*). Toutefois, il est important de noter qu'un système de gestion de réseau peut ne comporter qu'un seul de ces éléments, le gestionnaire de règles PM et le serveur de règles PS pouvant être deux systèmes physiques indépendants, susceptibles d'être vendus de façon séparée.

Il apparaît qu'il existe un écart sémantique important entre la définition du service qui peut être faite, par exemple dans le cadre d'un SLA/SLS, et les règles correspondantes qui doivent être mise en oeuvre par les éléments de réseau ou PEP, notamment les configurations de ces éléments de réseau.

Concrètement, cet écart peut apparaître au moins à deux niveaux :

D'une part, cela oblige le concepteur du service à posséder des connaissances de spécialiste réseau. Par exemple, il lui incombe de décider de lui-même de quelle façon un réseau privé virtuel VPN doit être implémenté, par exemple si le protocole IPsec doit être utilisé, ou bien si la technologie MPLS *(Multi-Protocol Label Switching)* doit être préférée.

D'autre part, cela oblige ce concepteur de service à avoir accès aux spécifications exactes de chaque élément de réseau à configurer. En effet, en fonction de leur fabriquant, un même type d'élément de réseau (routeur IP, dispositif pare-feu ou *firewall*...) se configure différemment, car les capacités peuvent être différentes.

Le but de la présente invention est de pallier cet inconvénient et de faciliter le développement de nouveaux services au moyen de règles.

Pour ce faire, l'invention a pour objet un système de gestion de réseau, pour la mise en oeuvre de service(s), disposant de moyens d'acquisition de règles de police, configurant ce ou ces services, et de moyens pour déterminer des commandes correspondant à ces règles de police et les transmettre à des éléments de réseaux. Ce système de gestion de réseau se caractérise en ce que les règles sont composées de règles de services et de règles d'implémentation, et en ce qu'il dispose de moyens de traitement pour inférer les règles afin de déterminer les commandes.

Selon un mode de réalisation de l'invention, les moyens de traitement comportent un moteur d'inférence.

Selon un mode de réalisation de l'invention, les règles d'implémentation comportent des règles de technologie et/ou des règles d'équipements.

Ainsi, par l'ajout d'un moyen de traitement au sein du système de gestion de réseau, permettant d'inférer, dynamiquement, des règles de services et des règles d'implémentation, la conception de nouveaux services peut être effectuée de façon indépendante de l'implémentation.

Notamment, cette conception peut être réalisée sans avoir à prendre en compte les particularités des différents éléments de réseau, et sans devoir tenir compte de données métiers pour choisir parmi un ensemble de solutions techniques pour implémenter ces nouveaux services.

L'invention et ses avantages apparaîtront de façon plus claire dans la description d'une mise en oeuvre qui va suivre, en liaison avec les figures jointes.
La figure 1, précédemment commentée, représente un système de gestion de réseau par règles de police, conforme à l'état de l'art.
La figure 2 schématise un système de gestion de réseau selon l'invention.

Sur la figure 2, il a été représenté un système de gestion de réseau NMS associé à un réseau N. Le réseau N comporte des éléments de réseau E₁, E₂... Eₙ. Ces éléments de réseau peuvent être des routeurs IP, des commutateurs ATM (Asynchronous *Transfert Mode)* etc.

Le système de gestion de réseau NMS comporte d'un part un moyen de traitement IE et deux bases de données D_{T} et D_{E}. Il est bien entendu que ces deux bases de données peuvent n'être que deux vues d'une même base de données physique.

Le moyen de traitement IE est préférentiellement un moteur d'inférence.

Il reçoit en entrée, d'une part des règles de service R_{S}, et d'autre part des règles d'implémentation. Ces règles d'implémentation sont, dans l'exemple de la figure 2, des règles de technologie R_{T} et des règles d'équipement R_{E}.

Une règle de service peut par exemple consister à créer un réseau privé virtuel (VPN) pendant une certaine période de temps.

En simplifiant, une telle règle pourrait être de la forme : «IF (timeperiod=march 2002) THEN (create VPN from site A to site B) ». Cette règle stipule qu'un réseau privé virtuel doit être créé entre les sites A et B, durant le mois de mars 2002.

Le moyen de traitement IE dispose par ailleurs, de règles d'implémentation. Ces règles d'implémentation peuvent contenir des règles de technologie R_{T}, par exemple mémorisées dans une base de données D_{T}.

Ces règles de technologie peuvent permettre de modéliser un savoir-faire métier et d'en automatiser son application.

Ainsi, dans le cas de l'exemple de ci-dessus concernant la mise en place d'un réseau privé virtuel, un choix de différentes technologies peut être fait. Notamment, il peut être mis en place à l'aide du protocole lPsec tel que défini dans le RFC 2401 de l'IETF *(Internet Engineering Task* Force) ou bien à l'aide de tunnels MPLS (*Multi-Protocol Label Switching)* tel que défini dans le RFC 3031 de l'IETF.

Une stratégie pour le choix de la technologie peut être de considérer le nombre de sites impliqués par le réseau privé virtuel et de se baser sur ce nombre pour décider quelle technologie est la plus appropriée : par exemple, si le nombre de site est inférieur à 5, alors le protocole IPsec sera préféré, sinon, on choisira plutôt le protocole MPLS.

Cette stratégie peut être modélisée sous la forme de règles de technologie R_{T} et stockée dans la base de données technologique D_{T}.

En simplifiant, ces règles de technologie R_{T} peuvent être écrites sous la forme :
IF (number_of_sites < 5) THEN (tunneling technology = IPsec)
IF (number of sites ≥ 5) THEN (tunneling technology = MPLS).

Le moyen de traitement IE peut alors corréler les règles de service avec les règles de technologie. Ce moyen de traitement peut notamment comporter un moteur d'inférence. Comme exemples d'un tel moteur d'inférence, on peut citer le produit « IlogRules» de la société Ilog, ou bien Jess (Java Expert System Shell).

De la même façon, le moyen de traitement peut disposer de règles d'équipement R_{E}, qui peuvent être stockées dans une base de données d'équipements D_{E}.

Ces règles d'équipements permettent de modéliser la façon dont les règles doivent être adaptées ou sélectionnées pour un type d'équipement particulier. En effet, même fonctionnellement identiques, deux équipements de réseau peuvent avoir des capacités différentes. Ces capacités peuvent dépendre du fabricant des équipements de réseau, ou bien même des différents modèles de la gamme d'un même fabricant. A titre d'exemple, certains équipements (comme des routeurs) peuvent supporter la technologie MPLS ou non. Les règles d'équipements R_{E} peuvent prendre ce fait en compte, de sorte que la bonne implémentation sera choisie par le système de gestion.

En reprenant le même exemple, une règle d'équipement R_{E} peut être écrite comme suit :
IF (equipment = TYPE1) THEN (tunneling technology=IPsec)

Cela signifie que si les équipements de Typel ne peuvent pas supporter la technologie MPLS et que donc IPSec est la seule option.

Si l'équipement n'est pas de Typel, alors, dans l'exemple, aucune règle d'équipement n'est spécifiée et le choix de la bonne implémentation est effectué sur la base des règles de technologie R_{T}, mentionnées précédemment.

Ainsi, les services peuvent être décrits sous la forme de règles de services Rₛ, indépendamment de la technologie à mettre en oeuvre et des spécificités des équipements de réseau. Les aspects liés à la technologie à mettre en oeuvre et à ces spécificités peuvent être modélisés sous la forme de règles d'implémentation (ou métarègles).

## Revendications

1. Système de gestion de réseau pour mettre en oeuvre au moins un service sur ledit réseau, disposant de moyens d'acquisition de règles de police configurant ledit au moins un service, et de moyens pour déterminer des commandes correspondant auxdites règles de police et les transmettre à des éléments de réseaux, **caractérisé en ce que** lesdites règles sont composées de règles de services et de règles d'implémentation, et **en ce qu'**il dispose de moyens de traitement pour inférer lesdites règles afin de déterminer lesdites commandes.

2. Système de gestion de réseau selon la revendication 1, dans lequel lesdits moyens de traitement comportent un moteur d'inférence.

3. Système de gestion de réseau selon l'une des revendications précédentes, dans lequel lesdites règles d'implémentation comportent des règles de technologie et/ou des règles d'équipements.
